# EUROPEAN PATENT SPECIFICATION

(11) **EP 3 164 304 B1**
(45) Date of publication and mention of the grant of the patent: **13.06.2018**
(21) Application number: 14735946.7
(22) Date of filing: 03.07.2014
(51) Int. Cl.: B60S 1/38, B60S 1/40

(54) **A WINDSCREEN WIPER DEVICE**
SCHEIBENWISCHERVORRICHTUNG
DISPOSITIF DE BALAI D'ESSUIE-GLACE

(43) Date of publication of application: 10.05.2017
(73) Proprietor: Federal-Mogul S.A., 6790 Aubange (BE)
(72) Inventor: FRISCIONI, Thomas, F-54135 Mexy (FR)
(74) Representative: Hooiveld, Arjen Jan Winfried
(86) International application number: PCT/EP2014/064191
(87) International publication number: WO 2016/000778

(56) References cited:
- DE-A1-102011 053 090
- DE-A1-102012 100 778
- US-A1- 2014 068 886

## Description

The present invention relates to a windscreen wiper device of the flat blade type comprising an elastic, elongated carrier element, as well as an elongated wiper blade of a flexible material, which can be placed in abutment with a windscreen to be wiped, which wiper blade includes at least one longitudinal groove, in which groove a longitudinal strip of the carrier element is disposed, which windscreen wiper device comprises a connecting device for an oscillating arm, wherein said oscillating arm can be pivotally connected to said connecting device about a pivot axis near one end, with the interposition of a joint part, wherein said joint part comprises at least one resilient tongue arranged to engage into a correspondingly shaped hole provided in a base of a U-shaped cross-section of said oscillating arm, wherein said resilient tongue is hingeable between a inward position, wherein said wiper blade can be released from said oscillating arm, and an outward position, wherein said wiper blade can be retained on said oscillating arm.

In use, said oscillating arm is connected to a mounting head mounted on a drive shaft, wherein said oscillating arm at one end thereof is pivotally connected to the mounting head by means of a pivot pin and at another end thereof is connected to said wiper blade placed in abutment with said windscreen to be wiped. In use, the shaft rotates alternately in a clockwise and in a counter-clockwise sense carrying the mounting head into rotation also, which in turn draws the oscillating arm into rotation and by means of said connecting device moves the wiper blade. Said oscillating arm can thus oscillate to-and-from between a first reversal position and a second reversal position. In said first reversal position the oscillating arm extends parallel to a windscreen to be wiped and is located near a lower edge of said windscreen to be wiped. Also, in said second reversal position the oscillating arm extends also parallel to a windscreen to be wiped and is located in a central region or near a side edge of said windscreen to be wiped.

The present invention also relates to a vehicle equipped with such a windscreen wiper device, as well as to a method for manufacturing such a windscreen wiper device.

It is noted that the present invention is not restricted to automobiles, but also refers to rail coaches and other (fast) vehicles.

Such a windscreen wiper device is generally known from European patent publication no. 1 403 156 of the same Applicant. This prior art windscreen wiper device is designed as a "yokeless" wiper device or "flat blade", wherein no use is made of several yokes pivotally connected to each other, but wherein the wiper blade is biased by the carrier element, as a result of which it exhibits a specific curvature. In this prior art windscreen wiper device the joint part comprises at least one resilient tongue engaging in a correspondingly shaped hole provided in the oscillating arm, wherein the resilient tongue is rotatable along an hinge axis between an outward position retaining the wiper blade onto the oscillating arm and an inward position releasing the wiper blade from the oscillating arm. In order to connect the wiper blade onto the oscillating arm, the resilient tongue is initially pushed in against a spring force - as if it were a push button - and then allowed to spring back into the hole provided in the oscillating arm, thus snapping, that is clipping the resilient tongue into the hole. By subsequently pushing in again the resilient tongue against the spring force, the wiper blade may be released from the oscillating arm. In practice this interconnection between said joint part and said oscillating arm is called a bayonet connection. DE-A-102011053090 shows the preamble of claims 1 and 14. The object of the invention is to provide an improved windscreen wiper device at minimum costs - without using complex machinery and additional tools -, while the connecting device and the oscillating arm can be interconnected in a reliable and secure manner, using less parts.

In order to accomplish that objective, a windscreen wiper device of the type referred to in the introduction is characterized according to the invention in that said resilient tongue comprises a first step and a second step, wherein said first step is arranged to abut an edge of said hole of an oscillating arm of a first type facing towards a free end thereof, wherein said second step is arranged to abut an edge of said hole of an oscillating arm of a second type facing towards a free end thereof, and wherein said oscillating arm of the first type and said oscillating arm of the second type mutually differ in a distance between legs of the U-shaped cross-section of said oscillating arms. Preferably, an upper surface of said first step is located closer to said wiper blade (and in use thus to a windscreen to be wiped) than an upper surface of said second step.

Preferably, said joint part is detachably connected to said connecting device particularly through a snapping/clipping operation. In particular, said snapping operation is realized by pivotally engaging protrusions of said connecting device at the location of said pivot axis into recesses provided in said joint part. More in particular, said joint part has an at least substantially U-shaped cross-section at the location of its attachment to said connecting device, wherein each leg of said U-shaped cross-section is provided with a recess provided coaxially with said pivot axis. Further, the protrusions that function as bearing surfaces, are spaced far apart, so that the forces exerted thereon will be relatively low.

Said joint part is arranged to be connected to said connecting device for different U-shaped cross-sections of the oscillating arm, wherein said joint part is subsequently connected to said connecting device by said pivotally engaging protrusions of said connecting device, at the location of said pivot axis, in said recesses provided in said joint part, and wherein the oscillating arm can be subsequently connected to said joint part. The essence of the present invention is that said connecting device and said joint part each are a universal connection part for each type of U-shaped cross-section of the oscillating arm. A same type of said joint part to be connected to a same type of said connecting device may be used for each different type of U-shaped cross-section of the oscillating arm. The advantage achieved by the invention is that a unit consisting of said wiper blade, said connecting device and said joint part connected to said connecting device can be manufactured for each and every type of U-shaped cross-section of said oscillating arm. Thus, a universal connection between the wiper blade and the oscillating arm is obtained, so that car drivers are given the possibility to buy also non-original cheap wiper blades fitting the original oscillating arms on their cars. As indicated above, the U-shaped cross-sections of said oscillating arms mutually differ as far as the distance between the legs of the U-shaped cross-section of the respective oscillating arm is concerned. In particular, said distance in the oscillating arm of the first type is 22 mm, while said distance in the oscillating arm of the second type is 19 mm.

The present invention thus provides a universal connecting unit (consisting of said connecting device and said joint part) that is firmly attached to the oscillating arm.

In a preferred embodiment of a windscreen wiper device in accordance with the invention said joint part has an at least substantially U-shaped cross-section at a location of its attachment to said connecting device, wherein at least one leg of said U-shaped cross-section of said joint part comprises an attaching lug, and wherein said attaching lug is arranged to snappingly engage a corresponding leg of the U-shaped cross-section of said oscillating arms of the first type and the second type. Preferably, both legs are equipped with such an attaching lug. Said attaching lug forms a flexible articulation.

In a further preferred embodiment of a windscreen wiper device according to the invention said attaching lug comprises a protrusion extending laterally inwardly, wherein said attaching lug is hingeable between a downward position, wherein said wiper blade can be released from said oscillating arm of the first type and the second type, and an upward position, wherein said wiper blade can be retained on said oscillating arms of the first type and the second type and wherein said protrusion is arranged to snap behind said corresponding leg of said U-shaped cross-section of said oscillating arms of the first type and the second type. Particularly, said joint part comprises a cam, wherein said cam and said attaching lug are arranged to longitudinally retain between them the legs of the U-shaped cross-section of said oscillating arm of the first type.

In a further preferred embodiment of a windscreen wiper device in accordance with the invention said attaching lug comprises a protrusion extending laterally inwardly, wherein said attaching lug can be pushed in and out in longitudinal direction between a inward position, wherein said wiper blade can be released from said oscillating arms of the first type and the second type, and an outward position, wherein said wiper blade can be retained on said oscillating arms of the first type and the second type and wherein said protrusion is arranged to snap into a correspondingly shaped recess of said corresponding leg of said U-shaped cross-section of said oscillating arms of the first type and the second type. Preferably, said connecting device comprises a cam, wherein said cam and said attaching lug are arranged to longitudinally retain between them the legs of the U-shaped cross-section of said oscillating arm of the second type. Pushing in and out may be carried out manually.

In a further preferred embodiment of a windscreen wiper device according to the invention each leg of the U-shaped cross-section of said oscillating arms of the first type and the second type comprises clamping members engaging around longitudinal sides of said joint part that face away from each other. Hence, a locking of said wiper blade in transverse direction (in use perpendicular to a windscreen to be wiped) is ensured. Said clamping members are preferably formed by bended edges of said legs of the U-shaped cross-section and are in one piece therewith.

Said joint part is preferably made in one piece of plastic.

As mentioned earlier, the present invention also refers to a vehicle provided with a windscreen wiper device in accordance with the invention.

The present invention is also directed to a method for manufacturing a windscreen wiper device of the flat blade type comprising an elastic, elongated carrier element, as well as an elongated wiper blade of a flexible material, which can be placed in abutment with a windscreen to be wiped, which wiper blade includes at least one longitudinal groove, in which groove a longitudinal strip of the carrier element is disposed, which windscreen wiper device comprises a connecting device for an oscillating arm, wherein said oscillating arm can be pivotally connected to said connecting device about a pivot axis near one end, with the interposition of a joint part, wherein said joint part comprises at least one resilient tongue arranged to engage into a correspondingly shaped hole provided in a base of a U-shaped cross-section of said oscillating arm, wherein said resilient tongue is hingeable between a inward position, wherein said wiper blade can be released from said oscillating arm, and an outward position, wherein said wiper blade can be retained on said oscillating arm, characterized in that said resilient tongue comprises a first step and a second step, wherein said first step is arranged to abut an edge of said hole of an oscillating arm of a first type facing towards a free end thereof, wherein said second step is arranged to abut an edge of said hole of an oscillating arm of a second type facing towards a free end thereof, and wherein said oscillating arm of the first type and said oscillating arm of the second type mutually differ in a distance between legs of the U-shaped cross-section of said oscillating arms.

The invention will now be explained more in detail with reference to figures illustrated in a drawing, wherein
- figure 1 shows several schematic views of an oscillating arm to be used in a windscreen wiper device of the flat blade type according to the invention;
- figure 2 shows a perspective, schematic view of a connecting device together with a joint part in a preferred embodiment according to the invention to be used in a windscreen wiper device of the flat blade type;
- figure 3 shows a perspective and side view of the connecting device together with the joint part of figure 2, all with (a part of) an oscillating arm of the first type and the second type, respectively;
- figures 4 and 5 show a side view of the connecting device together with the joint part of figure 2 arranged to be connected to an oscillating arm of the first type and the second type, respectively;
- figures 6 and 7 show a perspective view of an interconnection between the joint part and the oscillating arm of the first type (22 mm) of figure 2;
- figure 8 shows several views of another interconnection between the joint part and the oscillating arm of figure 2;
- figure 9 corresponds to figure 5 (referring to an oscillating arm of the second type (19 mm);
- figure 10 corresponds to figure 4 (referring to an oscillating arm of the first type (22 mm); and
- figure 11 corresponds to figures 6 and 7 (but now referring to an oscillating arm of the second type (19 mm)).

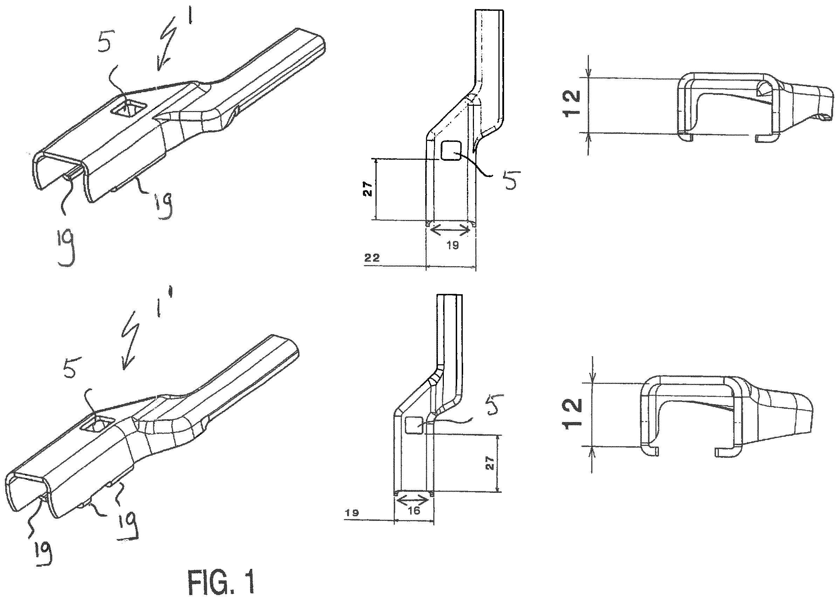

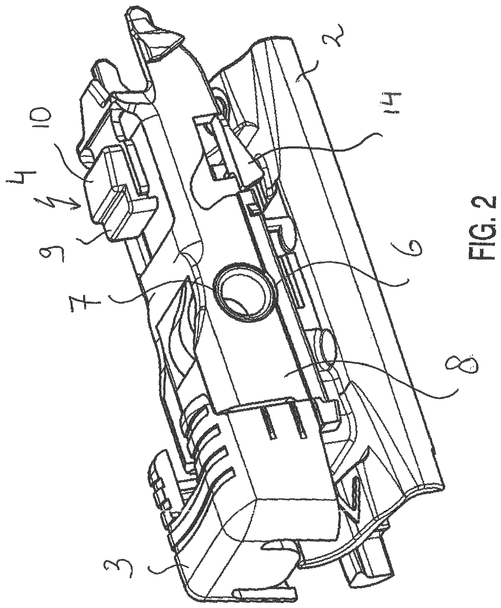

Figure 1 shows several schematic views of (a part of) an oscillating arm 1 to be used in a windscreen wiper device of the flat blade type according to the invention. Such a windscreen wiper device of the flat blade type is typically built up of an elastomeric (rubber) wiper blade comprising a central longitudinal groove, wherein a longitudinal strip made of spring band steel is fitted in said longitudinal groove. Said strip forms a flexible carrier element for the rubber wiper blade, as it were, which is thus biased in a curved position (the curvature in operative position being that of a windscreen to be wiped). Usually an end of said strip and/or an end of said wiper blade is connected on either side of the windscreen wiper device to respective connecting pieces or "end caps". The connecting pieces may be formed as separate constructional elements, which may be form-locked as well as force-locked to both ends of said strip and/or ends of said wiper blade. In the alternative, said connecting pieces may be in one piece with the strip made of spring band steel. The windscreen wiper device is furthermore built up of a connecting device 2 of metal for connecting said oscillating wiper arm 1 thereto, with the interposition of a joint part 3 (figure 2). The oscillating wiper arm 1 is pivotally connected to the connecting device 2 about a pivot axis near one end.

In figure 1 two oscillating arms 1,1' are shown, namely an oscillating arm 1 of the first type and an oscillating arm 1' of the second type mutually differing in a distance between legs of an U-shaped cross-section of said oscillating arms 1,1'. As depicted, said distance in the oscillating arm 1 of the first type is 22 mm, while said distance in the oscillating arm 1' of the second type is 19 mm.

As can be seen in figure 2, the joint part 3 comprises a resilient tongue 4 extending outwardly, while the oscillating arm 1,1' has said U-shaped cross-section at the location of its connection to said joint part 3, so that the tongue 4 engages in an identically shaped hole 5 provided in a base of said U-shaped cross-section. The connecting device 2 with the wiper blade is mounted onto the oscillating arm 1,1' as follows. The joint part 3 being already clipped onto the connecting device 2 is pivoted relative to the connecting device 2, so that said joint part 3 can be easily slid on a free end of the oscillating arm 1,1'. During this sliding movement the resilient tongue 4 is initially pushed in against a spring force and then allowed to spring back into said hole 5, thus snapping, that is clipping the resilient tongue 4 into the hole 5. This is a so-called bayonet-connection. The oscillating arm 1,1' together with the joint part 3 may then be pivoted back in a position parallel to the wiper blade in order to be ready for use. By subsequently pushing in again said resilient tongue 4 against the spring force (as if it were a push button), the connecting device 2 and the joint part 3 together with the wiper blade may be released from the oscillating arm 1,1'. Dismounting the connecting device 2 with the wiper blade from the oscillating arm 1,1' is thus realized by sliding the connecting device 2 and the joint part 3 together with the wiper blade in a direction away from the oscillating arm 1,1'.

Although not shown in figure 1, but fully understood by a skilled person, said oscillating arm 1,1' is connected to a mounting head fixed for rotation to a shaft driven by a small motor. In use, the shaft rotates alternately in a clockwise and in a counter-clockwise sense carrying the mounting head into rotation also, which in turn draws said oscillating arm 1,1' into rotation and by means of said connecting device 2 moves said wiper blade.

In figure 2 is depicted a unit consisting of a connecting device 2 and a joint part 3 detachably and pivotally connected thereto according to the invention, wherein said unit is universal part in the sense that it can be used for each and every type of oscillating arm 1,1' with a U-shaped cross-section, that is, for example, for said oscillating arm 1 of the first type on the one hand and for said oscillating arm 1' of the second type on the other hand. Said connecting device 2 is particularly welded, soldered, glued or clamped onto two spaced-apart longitudinal strips disposed on opposite sides in longitudinal grooves of the wiper blade. In the alternative or in addition thereto, said connecting device 2 is connected to the elastomeric (rubber) material of the wiper blade, for example glued or clamped. As can be seen in figure 2, said connecting device 2 comprises two cylindrical protrusions 6 extending outwardly on either side thereof. These protrusions 6 pivotally engage in identically shaped cylindrical recesses 7 in legs 8 of a U-shaped cross-section of said joint part 3. Said protrusions 6 function as bearing surfaces at the location of the pivot axis in order to pivot the joint part 3 (and the oscillating arm 1,1' attached thereto) about said pivot axis near one end of said oscillating arm 1,1'. The protrusions 6 are preferably in one piece with said connecting device 2. In the alternative said protrusions 6 are part of a separate pin to be inserted into opposite holes in sidewalls of said connecting device 2 (not shown).

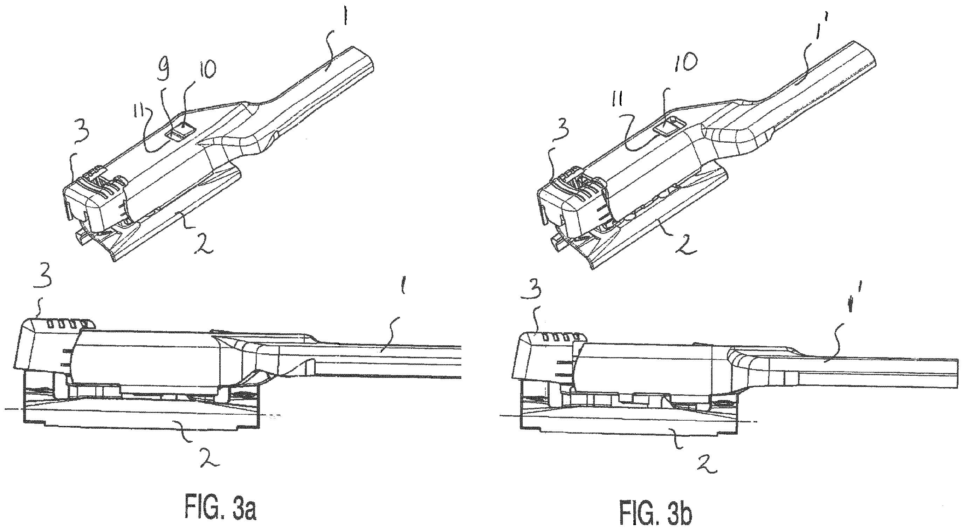

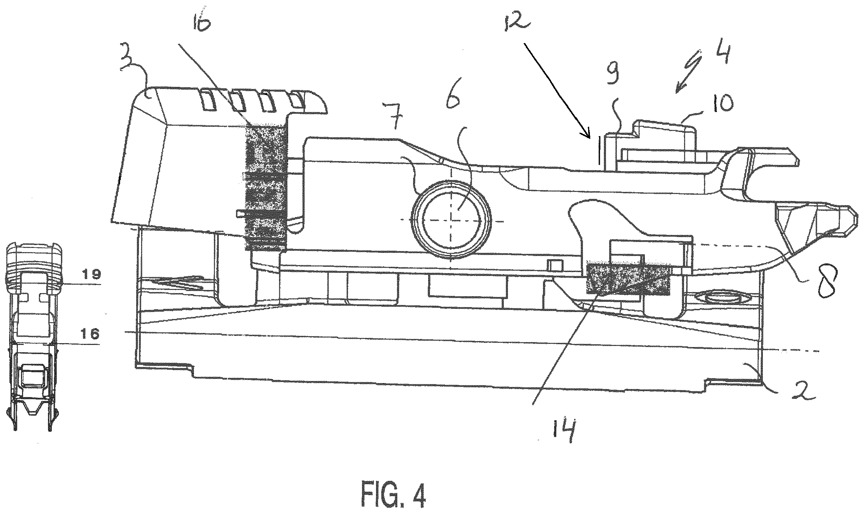

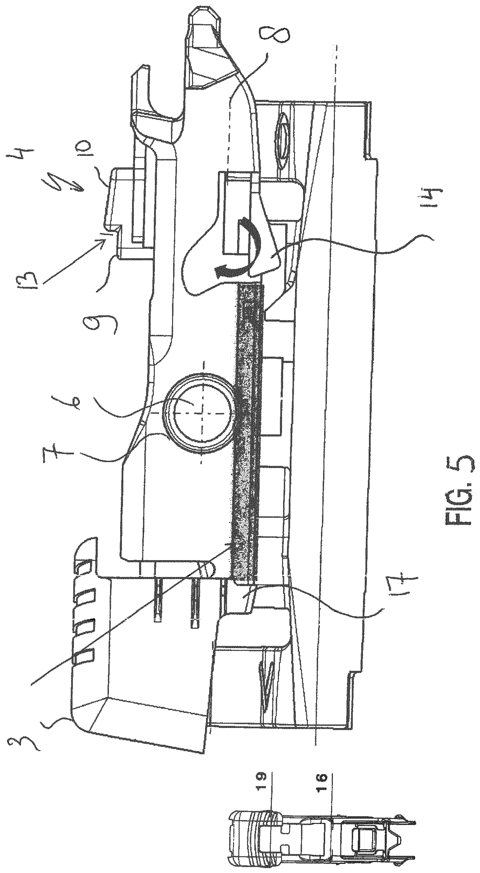

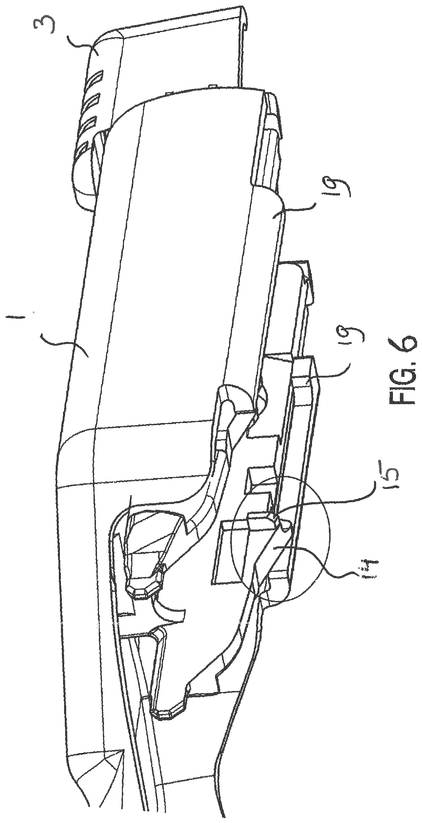

As depicted in figures 2, 3 and 4, said resilient tongue 4 of said joint part 3 comprises a first step 9 and a second step 10 as if it were a staircase. Said first step 9 is arranged to abut an edge 11 of said hole 5 of said oscillating arm 1 of a first type facing towards a free end thereof. Said second step 10 is arranged to abut also said edge 11 of said hole 5 of said oscillating arm 1' of a second type. In figures 4 and 5 sides of the steps 9,10 are indicated with reference numerals 12,13, respectively, which abut the edge 11 of said hole 5 in case an oscillating arm 1 of the first type or an oscillating arm 1' of the second type is used. As shown in figure 4, the legs 8 of said U-shaped cross-section of said joint part 3 each comprises an attaching lug 14. Said attaching lug 14 is arranged to snappingly engage a corresponding leg of the U-shaped cross-section of said oscillating arms 1,1' of the first type and the second type. With reference to figure 6, said attaching lug 14 comprises a protrusion 15 extending laterally inwardly, wherein said attaching lug 14 is hingeable between a downward position (figure 5), wherein said wiper blade can be released from said oscillating arms 1,1' of the first type and the second type, and an upward position (figure 4), wherein said wiper blade can be retained on said oscillating arms 1,1' of the first type and the second type. In the upward position said protrusion 15 is arranged to snap behind said corresponding leg of said U-shaped cross-section of said oscillating arm 1 of the first type. Reference is made to figures 4 and 6.

In case of an oscillating arm 1 of the first type, the legs of the U-shaped cross-section of said oscillating arm 1 of the first type are clamped between a cam 16 on the joint part 3 and said attaching lug 14 in order to ensure locking thereof in longitudinal direction, wherein reference is made to figure 4. When an oscillating arm 1' of the second type is used, the legs of the U-shaped cross-section of said oscillating arm 1' of the second type are clamped between a cam 17 on the connecting device 2 and said attaching lug 14 in order to ensure locking thereof in longitudinal direction, wherein reference is made to figure 5.

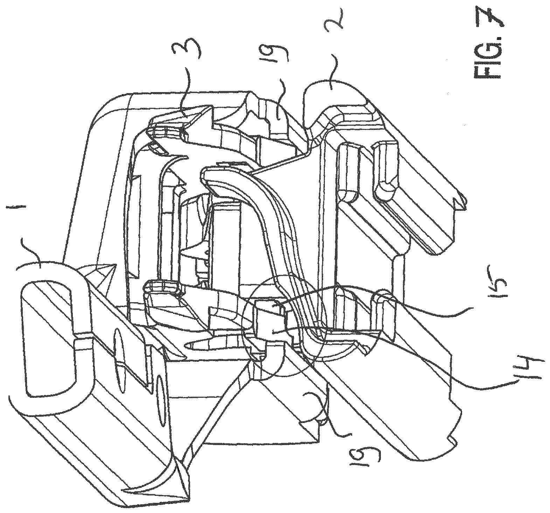

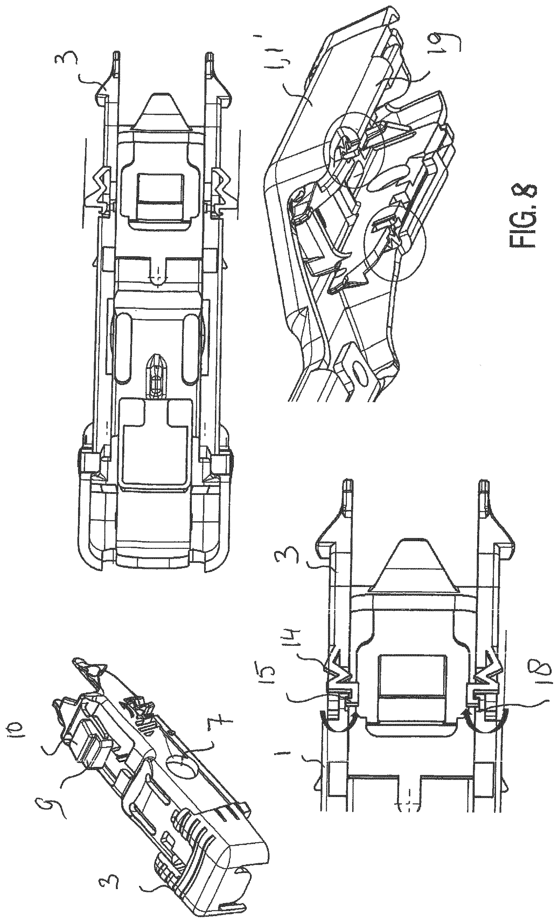

Parts in figure 7 and 8 that correspond to their counterparts in figures 1 through 6 have been designated with the same reference numerals. In the embodiment of figure 8, said attaching lug 14 also comprises a protrusion 15 extending laterally inwardly. However, said attaching lug 14 can now be pushed in and out in longitudinal direction between a inward position, wherein said wiper blade can be released from said oscillating arm 1 of the second type, and an outward position, wherein said wiper blade can be retained on said oscillating arm 1' of the second type and wherein said protrusion 15 is arranged to snap into a correspondingly shaped recess 18 of said corresponding leg of said U-shaped cross-section of said oscillating arm 1' of the second type.

With reference to figures 1, 6, 7 and 8 each leg of the U-shaped cross-section of said oscillating arms 1,1' of the first type and the second type comprises integral therewith clamping members 19 in form of edges bended inwardly engaging around longitudinal sides of said joint part 3 that face away from each other.

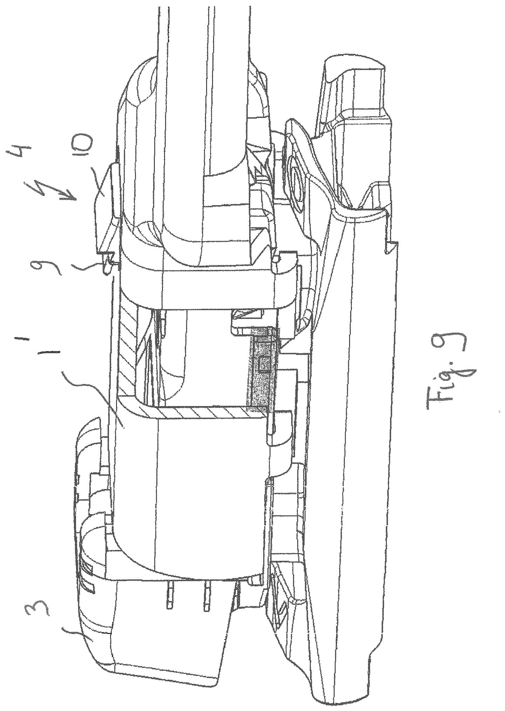

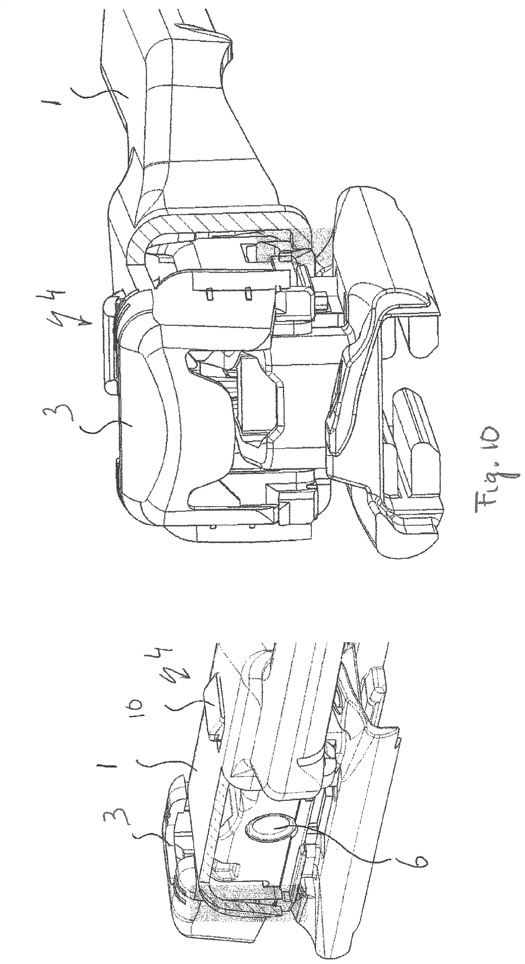

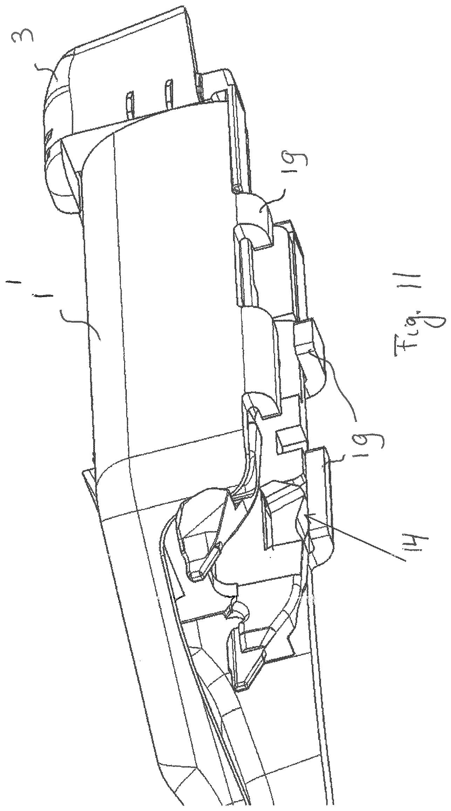

Figures 9, 10 and 11 are further views on the interconnection between the joint part 3 and the oscillating arms 1, 1', respectively, wherein corresponding parts have been designated with the same reference numerals.

The invention is not restricted to the variants shown in the drawing, but it also extends to other embodiments that fall within the scope of the appended claims.

## Claims

1. A windscreen wiper device of the flat blade type comprising an elastic, elongated carrier element, as well as an elongated wiper blade of a flexible material, which can be placed in abutment with a windscreen to be wiped, which wiper blade includes at least one longitudinal groove, in which groove a longitudinal strip of the carrier element is disposed, which windscreen wiper device comprises a connecting device (2) for an oscillating arm (1), wherein said oscillating arm (1) can be pivotally connected to said connecting device (2) about a pivot axis near one end, with the interposition of a joint part(3), wherein said joint part (3) comprises at least one resilient tongue (4) arranged to engage into a correspondingly shaped hole (5) provided in a base of a U-shaped cross-section of said oscillating arm, wherein said resilient tongue (4) is hingeable between a inward position, wherein said wiper blade can be released from said oscillating arm (1), and an outward position, wherein said wiper blade can be retained on said oscillating arm (1), **characterized in that** said resilient tongue comprises a first step (9) and a second step (10), wherein said first step (9) is arranged to abut an edge of said hole (5) of an oscillating arm (1') of a first type facing towards a free end thereof, wherein said second step (10) is arranged to abut an edge of said hole (5) of an oscillating arm (1") of a second type facing towards a free end thereof, and wherein said oscillating arm (1') of the first type and said oscillating arm (1") of the second type mutually differ in a distance between legs of the U-shaped cross-section of said oscillating arms (1',1").

2. A windscreen wiper device according to claim 1, wherein an upper surface of said first step (9) is located closer to said wiper blade than an upper surface of said second step (10).

3. A windscreen wiper device according to claim 1 or 2, wherein a distance between the legs of the U-shaped cross-section of said oscillating arm (1') of the first type is 22 mm, and wherein a distance between the legs of the U-shaped cross-section of said oscillating arm (1") of the second type is 19 mm.

4. A windscreen wiper device according to claim 1, 2 or 3, wherein said joint part (3) has an at least substantially U-shaped cross-section at a location of its attachment to said connecting device, wherein at least one leg of said U-shaped cross-section of said joint part (3) comprises an attaching lug (14), and wherein said attaching lug (14) is arranged to snappingly engage a corresponding leg of the U-shaped cross-section of said oscillating arms (1',1") of the first type and the second type.

5. A windscreen wiper device according to claim 4, wherein said attaching lug (14) comprises a protrusion (15) extending laterally inwardly, and wherein said attaching lug (14) is hingeable between a downward position, wherein said wiper blade can be released from said oscillating arms (1',1") of the first type and the second type, and an upward position, wherein said wiper blade can be retained on said oscillating arms (1',1") of the first type and the second type and wherein said protrusion (15) is arranged to snap behind said corresponding leg of said U-shaped cross-section of said oscillating arms (1',1") of the first type and the second type.

6. A windscreen wiper device according to claim 4, wherein said attaching lug (14) comprises a protrusion (15) extending laterally inwardly, and wherein said attaching lug can be pushed in and out in longitudinal direction between a inward position, wherein said wiper blade can be released from said oscillating arms (1',1") of the first type and the second type, and an outward position, wherein said wiper blade can be retained on said oscillating arms (1',1") of the first type and the second type and wherein said protrusion is arranged to snap into a correspondingly shaped recess of said corresponding leg of said U-shaped cross-section of said oscillating arms (1',1") of the first type and the second type.

7. A windscreen wiper device according to claim 5 or 6, wherein said joint part (3) comprises a cam (16), and wherein said (16) and said attaching lug (14) are arranged to longitudinally retain between them the legs of the U-shaped cross-section of said oscillating arm (1') of the first type.

8. A windscreen wiper device according to claim 5 or 6, wherein said connecting device (2) comprises a cam (16), and wherein said cam and said attaching lug are arranged to longitudinally retain between them the legs of the U-shaped cross-section of said oscillating arm (1') of the second type.

9. A windscreen wiper device according to any of the preceding claims 1 through 8, wherein each leg of the U-shaped cross-section of said oscillating arms (1',1") of the first type and the second type comprises clamping members (19) engaging around longitudinal sides of said joint part (3) that face away from each other.

10. A windscreen wiper device according to any of the preceding claims 1 through 9, wherein said joint part (3) is made of plastic.

11. A windscreen wiper device according to any of the preceding claims 1 through 10, wherein said joint part (3) is detachably connected to said connecting device (2) by pivotally engaging protrusions (6) of said connecting device (2) at the location of said pivot axis into recesses (7) provided in said joint part (8).

12. A windscreen wiper device according to any of the preceding claims 1 through 11, wherein said joint part (3) has an at least substantially U-shaped cross-section at the location of its attachment to said connecting device (2), and wherein each leg of said U-shaped cross-section is provided with a recess (7) provided coaxially with said pivot axis.

13. A vehicle provided with a windscreen wiper device according to any of the preceding claims 1 through 12.

14. A method for manufacturing a windscreen wiper device of the flat blade type comprising an elastic, elongated carrier element, as well as an elongated wiper blade of a flexible material, which can be placed in abutment with a windscreen to be wiped, which wiper blade includes at least one longitudinal groove, in which groove (3) a longitudinal strip of the carrier element is disposed, which windscreen wiper device (1) comprises a connecting device (2) for an oscillating arm (1), wherein said oscillating arm (1) can be pivotally connected to said connecting device (2) about a pivot axis near one end, with the interposition of a joint part(3), wherein said joint part (3) comprises at least one resilient tongue (4) arranged to engage into a correspondingly shaped hole (5) provided in a base of a U-shaped cross-section of said oscillating arm, wherein said resilient tongue is hingeable between an inward position, wherein said wiper blade can be released from said oscillating arm (1), and an outward position, wherein said wiper blade can be retained on said oscillating arm (1), **characterized in that** said resilient tongue (4) comprises a first step (9) and a second step (10), wherein said first step (9) is arranged to abut an edge of said hole (5) of an oscillating arm (1') of a first type facing towards a free end thereof, wherein said second step (10) is arranged to abut an edge of said hole (5) of an oscillating arm (1") of a second type facing towards a free end thereof, and wherein said oscillating arm (1') of the first type and said oscillating arm (1") of the second type mutually differ in a distance between legs of the U-shaped cross-section of said oscillating arms (1',1").

## Patentansprüche

1. Scheibenwischervorrichtung der gelenkfreien Art, umfassend ein elastisches, längliches Trägerelement, sowie ein längliches Wischerblatt aus einem flexiblen Material, das an eine zu wischende Windschutzscheibe angelegt werden kann, wobei das Wischerblatt mindestens eine Längsnut umfasst, wobei in der Nut ein Längsstreifen des Trägerelements angeordnet ist, wobei die Scheibenwischervorrichtung eine Verbindungsvorrichtung (2) für einen Schwingarm (1) umfasst, wobei der Schwingarm (1) mit der Verbindungsvorrichtung (2) um eine Schwenkachse in der Nähe eines Endes unter Einschiebung eines Gelenkteils (3) schwenkbar verbunden sein kann, wobei das Gelenkteil (3) mindestens eine federelastische Lasche (4) umfasst, die eingerichtet ist, um in ein entsprechend gestaltetes Loch (5) einzugreifen, das in einer Basis eines U-förmigen Querschnitts des Schwingarms bereitgestellt wird, wobei die federelastische Lasche (4) zwischen einer nach innen gerichteten Position, in der das Wischerblatt aus dem Schwingarm (1) gelöst werden kann, und einer nach außen gerichteten Position, in der das Wischerblatt an dem Schwingarm (1) festgehalten werden kann, angelenkt ist,
**dadurch gekennzeichnet, dass** die federelastische Lasche eine erste Stufe (9) und eine zweite Stufe (10) umfasst, wobei die erste Stufe (9) eingerichtet ist, um an einem Rand des Lochs (5) eines Schwingarms (1') eines ersten Typs, der einem freien Ende desselben zugewandt ist, anzuliegen, wobei die zweite Stufe (10) eingerichtet ist, um an einem Rand des Lochs (5) eines Schwingarms (1") eines zweiten Typs, der einem freien Ende desselben zugewandt ist, anzuliegen, und wobei sich der Schwingarm (1') des ersten Typs und der Schwingarm (1") des zweiten Typs durch einen Abstand zwischen den Schenkeln des U-förmigen Querschnitts des Schwingarms (1', 1") voneinander unterscheiden.

2. Scheibenwischervorrichtung nach Anspruch 1, wobei sich eine obere Oberfläche der ersten Stufe (9) näher an dem Wischerblatt befindet als eine obere Oberfläche der zweiten Stufe (10).

3. Scheibenwischervorrichtung nach Anspruch 1 oder 2, wobei ein Abstand zwischen den Schenkeln des U-förmigen Querschnitts des Schwingarms (1') des ersten Typs 22 mm beträgt, und wobei ein Abstand zwischen den Schenkeln des U-förmigen Querschnitts des Schwingarm (1") des zweiten Typs 19 mm beträgt.

4. Scheibenwischervorrichtung nach Anspruch 1, 2 oder 3, wobei das Gelenkteil (3) einen mindestens im Wesentlichen U-förmigen Querschnitt an einer Stelle seiner Anbringung an der Verbindungsvorrichtung aufweist, wobei mindestens ein Schenkel des U-förmigen Querschnitts des Gelenkteils (3) eine Anbringungsöse (14) umfasst, und wobei die Anbringungsöse (14) eingerichtet ist, um in einen entsprechenden Schenkel des U-förmigen Querschnitts des Schwingarms (1', 1") des ersten Typs und des zweiten Typs rastend einzugreifen.

5. Scheibenwischervorrichtung nach Anspruch 4, wobei die Anbringungsöse (14) einen Vorsprung (15) umfasst, der sich seitlich nach innen erstreckt, und wobei die Anbringungsöse (14) zwischen einer nach unten gerichteten Position, in der das Wischerblatt aus dem Schwingarmen (1', 1") des ersten Typs und des zweiten Typs gelöst werden kann, und einer nach oben gerichteten Position, in der das Wischerblatt an den Schwingarmen (1', 1") des ersten Typs und des zweiten Typs festgehalten werden kann, angelenkt ist, und wobei der Vorsprung (15) eingerichtet ist, um hinter dem entsprechenden Schenkel des U-förmigen Querschnitts des Schwingarms (1', 1") des ersten Typs und des zweiten Typs einzurasten.

6. Scheibenwischervorrichtung nach Anspruch 4, wobei die Anbringungsöse (14) einen Vorsprung (15) umfasst, der sich seitlich nach innen erstreckt, und wobei die Anbringungsöse in der Längsrichtung zwischen einer nach innen gerichteten Position, in der das Wischerblatt von den Schwingarmen (1', 1") des ersten Typs und des zweiten Typs gelöst werden kann, und einer nach außen gerichteten Position, in der das Wischerblatt an den Schwingarmen (1', 1") des ersten Typs und des zweiten Typs festgehalten werden kann, hinein und hinaus geschoben werden kann, und wobei der Vorsprung eingerichtet ist, um in eine entsprechend gestaltete Vertiefung des entsprechenden Schenkels des U-förmigen Querschnitts des Schwingarms (1', 1") des ersten Typs und des zweiten Typs einzurasten.

7. Scheibenwischervorrichtung nach Anspruch 5 oder 6, wobei das Gelenkteil (3) einen Nocken (16) umfasst, und wobei der Nocken (16) und die Anbringungsöse (14) eingerichtet sind, um längs dazwischen die Schenkel des U-förmigen Querschnitts des Schwingarms (1') des ersten Typs festzuhalten.

8. Scheibenwischervorrichtung nach Anspruch 5 oder 6, wobei die Verbindungsvorrichtung (2) einen Nocken (16) umfasst, und wobei der Nocken und die Anbringungsöse eingerichtet sind, um längs dazwischen die Schenkel des U-förmigen Querschnitts des Schwingarms (1') des zweiten Typs festzuhalten.

9. Scheibenwischervorrichtung nach einem der vorhergehenden Ansprüche 1 bis 8, wobei jeder Schenkel des U-förmigen Querschnitts der Schwingarme (1', 1") des ersten Typs und des zweiten Typs Klemmelemente (19) umfasst, die um die Längsseiten des Gelenkteils (3) herum, die voneinander abgewandt sind, in Eingriff kommen.

10. Scheibenwischervorrichtung nach einem der vorhergehenden Ansprüche 1 bis 9, wobei das Gelenkteil (3) aus Kunststoff besteht.

11. Scheibenwischervorrichtung nach einem der vorhergehenden Ansprüche 1 bis 10, wobei das Gelenkteil (3) mit der Verbindungsvorrichtung (2) abnehmbar verbunden ist, indem es die Vorsprünge (6) der Verbindungsvorrichtung (2) an der Stelle der Schwenkachse in Vertiefungen (7), die in dem Gelenkteil (8) bereitgestellt werden, schwenkbar in Eingriff bringt.

12. Scheibenwischervorrichtung nach einem der vorhergehenden Ansprüche 1 bis 11, wobei das Gelenkteil (3) einen mindestens im Wesentlichen U-förmigen Querschnitt an der Stelle seiner Anbringung an der Verbindungsvorrichtung (2) aufweist, und wobei jeder Schenkel des U-förmigen Querschnitts mit einer Vertiefung (7) versehen ist, die koaxial zur Schwenkachse bereitgestellt wird.

13. Fahrzeug, das mit einer Scheibenwischervorrichtung nach einem der vorhergehenden Ansprüche 1 bis 12 versehen ist.

14. Verfahren zum Herstellen einer Scheibenwischervorrichtung der gelenkfreien Art, umfassend ein elastisches, längliches Trägerelement, sowie ein längliches Wischerblatt aus einem flexiblen Material, das an eine zu wischende Windschutzscheibe angelegt werden kann, wobei das Wischerblatt mindestens eine Längsnut umfasst, wobei in der Nut ein Längsstreifen des Trägerelements angeordnet ist, wobei die Scheibenwischervorrichtung eine Verbindungsvorrichtung (2) für einen Schwingarm (1) umfasst, wobei der Schwingarm (1) mit der Verbindungsvorrichtung (2) um eine Schwenkachse in der Nähe eines Endes unter Einschiebung eines Gelenkteils (3) schwenkbar verbunden sein kann, wobei das Gelenkteil (3) mindestens eine federelastische Lasche (4) umfasst, die eingerichtet ist, um in ein entsprechend gestaltetes Loch (5) einzugreifen, das in einer Basis eines U-förmigen Querschnitts des Schwingarms bereitgestellt wird, wobei die federelastische Lasche (4) zwischen einer nach innen gerichteten Position, in der das Wischerblatt aus dem Schwingarm (1) gelöst werden kann, und einer nach außen gerichteten Position, in der das Wischerblatt an dem Schwingarm (1) festgehalten werden kann, angelenkt ist, **dadurch gekennzeichnet, dass** die federelastische Lasche eine erste Stufe (9) und eine zweite Stufe (10) umfasst, wobei die erste Stufe (9) eingerichtet ist, um an einem Rand des Lochs (5) eines Schwingarms (1') eines ersten Typs, der einem freien Ende desselben zugewandt ist, anzuliegen, wobei die zweite Stufe (10) eingerichtet ist, um an einem Rand des Lochs (5) eines Schwingarms (1") eines zweiten Typs, der einem freien Ende desselben zugewandt ist, anzuliegen, und wobei sich der Schwingarm (1') des ersten Typs und der Schwingarm (1") des zweiten Typs durch einen Abstand zwischen den Schenkeln des U-förmigen Querschnitts des Schwingarms (1', 1") voneinander unterscheiden.

## Revendications

1. Dispositif d'essuie-glace du type à balai plat comprenant un élément de support allongé élastique, ainsi qu'un balai d'essuie-glace allongé en un matériau souple, qui peut être placé en butée contre un pare-brise à essuyer, lequel balai d'essuie-glace comprend au moins une rainure longitudinale, dans laquelle rainure une bande longitudinale de l'élément de support est disposée, lequel dispositif d'essuie-glace comprend un dispositif de liaison (2) pour un bras oscillant (1), dans lequel ledit bras oscillant (1) peut être relié de manière pivotante audit dispositif de liaison (2) autour d'un axe de pivotement à proximité d'une extrémité, avec l'interposition d'une partie d'articulation (3), dans lequel ladite partie d'articulation (3) comprend au moins une languette élastique (4) agencée pour s'engager dans un trou de forme correspondante (5) prévu dans une base d'une section transversale en forme de U dudit bras oscillant, dans lequel ladite languette élastique (4) peut être articulée entre une position vers l'intérieur, dans laquelle ledit balai d'essuie-glace peut être libéré dudit bras oscillant (1), et une position vers l'extérieur, dans laquelle ledit balai d'essuie-glace peut être retenu sur ledit bras oscillant (1), **caractérisé en ce que** ladite languette élastique comprend un premier gradin (9) et un deuxième gradin (10), dans lequel ledit premier gradin (9) est agencé pour être contigu à un bord dudit trou (5) d'un bras oscillant (1') d'un premier type orienté vers une extrémité libre de celui-ci, dans lequel ledit deuxième gradin (10) est agencé pour être contigu à un bord dudit trou (5) d'un bras oscillant (1") d'un deuxième type orienté vers une extrémité libre de celui-ci, et dans lequel ledit bras oscillant (1') du premier type et ledit bras oscillant (1") du deuxième type diffèrent l'un de l'autre quant à une distance entre les branches de la section transversale en forme de U desdits bras oscillants (1', 1").

2. Dispositif d'essuie-glace selon la revendication 1, dans lequel une surface supérieure dudit premier gradin (9) est située plus près dudit balai d'essuie-glace qu'une surface supérieure dudit deuxième gradin (10).

3. Dispositif d'essuie-glace selon la revendication 1 ou 2, dans lequel une distance entre les branches de la section transversale en forme de U dudit bras oscillant (1') du premier type est de 22 mm, et dans lequel une distance entre les branches de la section transversale en forme de U dudit bras oscillant (1") du deuxième type est de 19 mm.

4. Dispositif d'essuie-glace selon la revendication 1, 2 ou 3, dans lequel ladite partie d'articulation (3) a une section transversale au moins sensiblement en forme de U à un emplacement de sa fixation audit dispositif de liaison, dans lequel au moins une branche de ladite section transversale en forme de U de ladite partie d'articulation (3) comprend une patte de fixation (14), et dans lequel ladite patte de fixation (14) est agencée pour venir en prise par encliquetage avec une branche correspondante de la section transversale en forme de U desdits bras oscillants (1', 1") du premier type et du deuxième type.

5. Dispositif d'essuie-glace selon la revendication 4, dans lequel ladite patte de fixation (14) comprend une protubérance (15) s'étendant latéralement vers l'intérieur, et dans lequel ladite patte de fixation (14) peut être articulée entre une position vers le bas, dans laquelle ledit balai d'essuie-glace peut être libéré desdits bras oscillants (1', 1") du premier type et du deuxième type, et une position vers le haut, dans laquelle ledit balai d'essuie-glace peut être retenu sur lesdits bras oscillants (1', 1") du premier type et du deuxième type, et dans lequel ladite protubérance (15) est agencée pour s'encliqueter derrière ladite branche correspondante de ladite section transversale en forme de U desdits bras oscillants (1', 1") du premier type et du deuxième type.

6. Dispositif d'essuie-glace selon la revendication 4, dans lequel ladite patte de fixation (14) comprend une protubérance (15) s'étendant latéralement vers l'intérieur, et dans lequel ladite patte de fixation peut être poussée et tirée dans la direction longitudinale entre une position vers l'intérieur, dans laquelle ledit balai d'essuie-glace peut être libéré desdits bras oscillants (1', 1") du premier type et du deuxième type, et une position vers l'extérieur, dans laquelle ledit balai d'essuie-glace peut être retenu sur lesdits bras oscillants (1', 1") du premier type et du deuxième type, et dans lequel ladite protubérance est agencée pour s'encliqueter dans un évidement de forme correspondante de ladite branche correspondante de ladite section transversale en forme de U desdits bras oscillants (1', 1") du premier type et du deuxième type.

7. Dispositif d'essuie-glace selon la revendication 5 ou 6, dans lequel ladite partie d'articulation (3) comprend une came (16), et dans lequel ladite came (16) et ladite patte de fixation (14) sont agencées pour retenir longitudinalement entre elles les branches de la section transversale en forme de U dudit bras oscillant (1') du premier type.

8. Dispositif d'essuie-glace selon la revendication 5 ou 6, dans lequel ledit dispositif de liaison (2) comprend une came (16), et dans lequel ladite came et ladite patte de fixation sont agencées pour retenir longitudinalement entre elles les branches de la section transversale en forme de U dudit bras oscillant (1') du deuxième type.

9. Dispositif d'essuie-glace selon l'une quelconque des revendications 1 à 8 précédentes, dans lequel chaque branche de la section transversale en forme de U desdits bras oscillants (1', 1") du premier type et du deuxième type comprend des éléments de serrage (19) en prise autour des côtés longitudinaux de ladite partie d'articulation (3) qui sont orientés à l'opposé l'un de l'autre.

10. Dispositif d'essuie-glace selon l'une quelconque des revendications 1 à 9 précédentes, dans lequel ladite partie d'articulation (3) est constituée d'une matière plastique.

11. Dispositif d'essuie-glace selon l'une quelconque des revendications 1 à 10 précédentes, dans lequel ladite partie d'articulation (3) est reliée de manière détachable audit dispositif de liaison (2) en étant en prise de manière pivotante avec les protubérances (6) dudit dispositif de liaison (2) à l'emplacement dudit axe de pivotement dans les évidements (7) prévus dans ladite partie d'articulation (8).

12. Dispositif d'essuie-glace selon l'une quelconque des revendications 1 à 11 précédentes, dans lequel ladite partie d'articulation (3) a une section transversale au moins sensiblement en forme de U à l'emplacement de sa fixation audit dispositif de liaison (2), et dans lequel chaque branche de ladite section transversale en forme de U est pourvue d'un évidement (7) prévu coaxialement avec ledit axe de pivotement.

13. Véhicule pourvu d'un dispositif d'essuie-glace selon l'une quelconque des revendications 1 à 12 précédentes.

14. Procédé pour fabriquer un dispositif d'essuie-glace du type à balai plat comprenant un élément de support allongé élastique, ainsi qu'un balai d'essuie-glace allongé en un matériau souple, qui peut être placé en butée contre un pare-brise à essuyer, lequel balai d'essuie-glace comprend au moins une rainure longitudinale, dans laquelle rainure (3) une bande longitudinale de l'élément de support est disposée, lequel dispositif d'essuie-glace (1) comprend un dispositif de liaison (2) pour un bras oscillant (1), dans lequel ledit bras oscillant (1) peut être relié de manière pivotante audit dispositif de liaison (2) autour d'un axe de pivotement à proximité d'une extrémité, avec l'interposition d'une partie d'articulation (3), dans lequel ladite partie d'articulation (3) comprend au moins une languette élastique (4) agencée pour s'engager dans un trou de forme correspondante (5) prévu dans une base d'une section transversale en forme de U dudit bras oscillant, dans lequel ladite languette élastique peut être articulée entre une position vers l'intérieur, dans laquelle ledit balai d'essuie-glace peut être libéré dudit bras oscillant (1), et une position vers l'extérieur, dans laquelle ledit balai d'essuie-glace peut être retenu sur ledit bras oscillant (1), **caractérisé en ce que** ladite languette élastique (4) comprend un premier gradin (9) et un deuxième gradin (10), dans lequel ledit premier gradin (9) est agencé pour être contigu à un bord dudit trou (5) d'un bras oscillant (1') d'un premier type orienté vers une extrémité libre de celui-ci, dans lequel ledit deuxième gradin (10) est agencé pour être contigu à un bord dudit trou (5) d'un bras oscillant (1") d'un deuxième type orienté vers une extrémité libre de celui-ci, et dans lequel ledit bras oscillant (1') du premier type et ledit bras oscillant (1") du deuxième type diffèrent l'un de l'autre quant à une distance entre les branches de la section transversale en forme de U desdits bras oscillants (1', 1").
